# FASCICULE DE BREVET EUROPEEN

(11) **EP 3 880 446 B1**
(45) Date de publication et mention de la délivrance du brevet: **28.12.2022**
(21) Numéro de dépôt: 19801373.2
(22) Date de dépôt: 14.11.2019
(51) Int. Cl.: B29C 70/32, B29C 70/54, B29L 31/06

(54) **PROCÉDÉ DE FABRICATION DE BIELLES EN COMPOSITE AVEC INSERTS VISSÉS**
VERFAHREN ZUR HERSTELLUNG VON VERBINDUNGSSTANGEN AUS VERBUNDMATERIAL MIT SCHRAUBEINSÄTZEN
METHOD FOR MANUFACTURING COMPOSITE LINK RODS WITH SCREWED INSERTS

(30) Priorité: 15.11.2018 EP 18206486
(43) Date de publication de la demande: 22.09.2021
(73) Titulaire: BD Invent SA, 4681 Hermalle sous Argenteau (BE)
(72) Inventeur: BOVEROUX, Benoît, 4000 ROCOURT (BE)
(74) Mandataire: AWA Benelux
(86) Numéro de dépôt international: PCT/EP2019/081414
(87) Numéro de publication internationale: WO 2020/099607

(56) Documents cités:
- US-A1- 2015 219 201

## Description

### Objet de l'invention

La présente invention se rapporte à un procédé de fabrication de bielles composites avec inserts vissés.

### Art antérieur

Dans le cadre d'application aéronautique, les bielles reprennent des efforts qui peuvent varier fortement. Certaines bielles ont des charges en traction/compression de quelques daN alors que d'autres ont des charges en traction/compression de plus de 5000 daN.

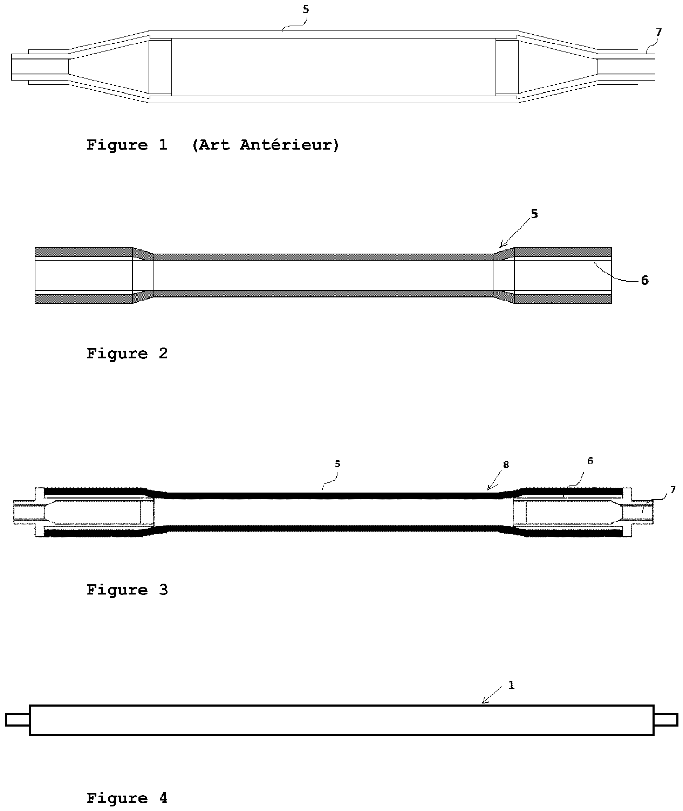

A titre d'exemple, le document EP 2 266 788 décrit un procédé de fabrication de bielles en composite adaptées pour reprendre des charges importantes. Le procédé comprend une étape consistant à enrouler des fibres pré-imprégnées sur un tube composite et sur les inserts positionnés à ses extrémités. L'insert 7 est ainsi pris dans le corps de bielle 5 tel qu'illustré à la figure 1. Cet agencement permet de reprendre des charges importantes. Toutefois, ce procédé est plus onéreux car il nécessite la fabrication préalable d'un mandrin pour la réalisation du tube composite. Pour la fabrication de bielles destinées à reprendre de faibles charges, ce procédé est trop onéreux.

Du brevet US 5,233,737, on connaît un procédé de fabrication d'une bielle avec insert vissé adaptée pour reprendre des charges plus faibles. Ce procédé de fabrication fait référence à un outillage constitué de 3 parties - voir figure 3 du document, références 44, 42, 46. Ce procédé de fabrication présente plusieurs désavantages :
- Fabrication d'une seule pièce par mandrin,
- Outillage avec une longueur et donc une bielle de longueur déterminée, un outillage est donc nécessaire pour chaque variation dans la longueur et le diamètre de corps de bielle,
- Le filet a un diamètre qui va en s'évasant vers l'extrémité ouverte du corps de bielle, ce qui augmente de manière importante l'encombrement externe du corps de bielle et par là-même réduit la charge maximum que la bielle peut supporter en flambage. En effet, pour un même diamètre aux extrémités du corps de bielle, le diamètre au centre du corps de bielle sera plus petit dans le cas d'un filet qui s'évase comparé à un filet de diamètre constant. Il s'ensuit pour ce diamètre au centre du corps de bielle plus faible une réduction de la charge maximum au flambage.

Du document US 2015/219201, on connaît un procédé de fabrication d'un élément de barre incluant un tuyau et des éléments de métal. Le procédé comprend une étape de formation d'un élément de noyau incluant un mandrin et un anneau de métal présentant une face périphérique externe rendue rugueuse, une étape d'enroulement de fibres de verre autour de la face périphérique externe, une étape d'enroulement de fibres de carbone préimprégnées autour de l'élément de noyau, une étape de formation du tuyau où la portion d'extrémité est raccordée et fixée de manière externe à la face périphérique externe de l'anneau de métal en polymérisant les fibres de carbone préimprégnées, une étape de retrait du mandrin hors du tuyau et une étape de vissage ensemble des éléments de métal et de l'anneau de métal.

### But de l'invention

Pour pallier ces désavantages, la présente invention propose un procédé qui permet de réaliser des bielles avec inserts vissés de manière industrielle avec des capacités de production extrêmement importantes. Ce procédé permet ainsi de réduire les coûts de fabrication. Ce procédé est également adapté pour réaliser des filets de diamètre constant de manière à maximiser la charge au flambage.

### Brève description des figures

La figure 1 représente une bielle avec insert selon l'art antérieur.
La figure 2 représente la bielle obtenue avec le procédé selon l'invention.
La figure 3 représente cette même bielle avec les inserts vissés.
Les figures 4 et 5 représentent respectivement le mandrin et la bague utilisés dans le procédé selon l'invention.
La figure 6 représente la pluralité de bagues positionnées sur le mandrin de la figure 4.
La figure 7 illustre l'étape d'enroulement filamentaire sur la pluralité de bagues et le mandrin de la figure 6.
La figure 8 illustre l'étape de retrait du mandrin après l'étape illustré à la figure 7.
La figure 9 illustre l'étape de découpe au niveau des bagues pour obtenir un corps de bielle avec une portion de bague à chaque extrémité.
La figure 10 représente le corps de bielle issu de l'étape de découpe illustrée à la figure 9.

### Description de l'invention

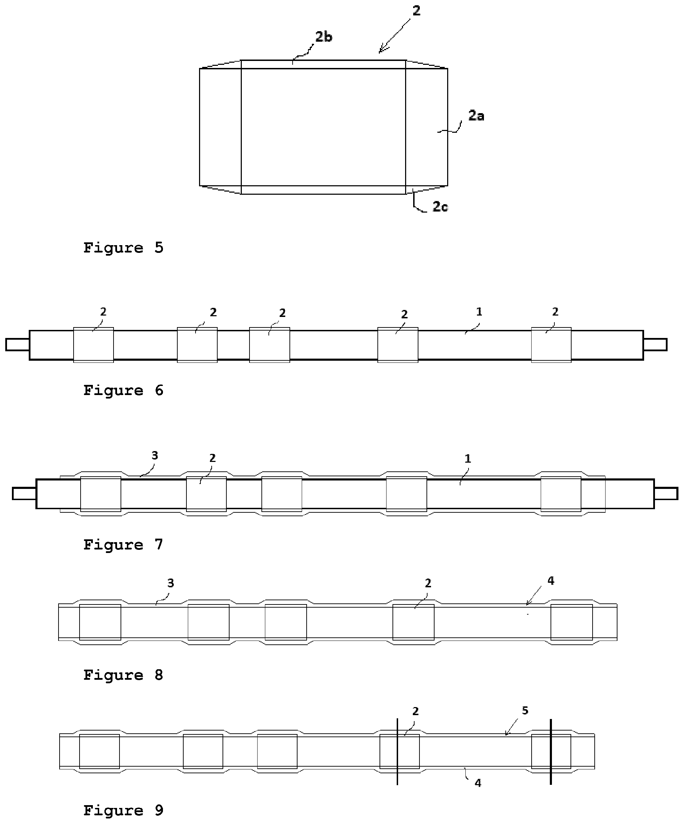

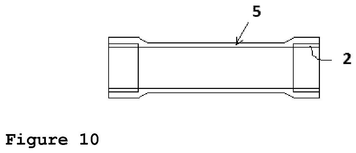

La présente invention se rapporte à un procédé de fabrication d'une bielle en matériau composite présentant à ses extrémités une partie filetée permettant le montage d'inserts. Le procédé selon l'invention comporte les étapes suivantes :
- Mettre à disposition un mandrin 1 cylindrique qui est visible à la figure 4. Préférentiellement, il s'agit d'un mandrin métallique de diamètre constant.
- Mettre à disposition une pluralité de bagues 2 ayant un diamètre intérieur légèrement supérieur à celui du mandrin 1 de manière à pouvoir être positionnées autour du mandrin. Par souci de clarté et de simplification, on dira que la bague a un diamètre intérieur sensiblement égal à celui du diamètre extérieur du mandrin. Chaque bague visible à la figure 5 se présente sous forme d'une pièce tubulaire avec un filet externe 2b et un alésage lisse 2a. Elle présente sur son pourtour extérieur un rétrécissement 2c aux extrémités, qui consiste en une entrée de filet conventionnelle. A titre d'exemple, la bague est en téflon.
- Positionner à intervalle sur la longueur du mandrin 1 lesdites bagues 2 (fig.6). L'espacement entre deux bagues est fonction de la longueur de la bielle qu'on souhaite fabriquer. L'intervalle peut ainsi être régulier ou irrégulier comme illustré à la figure 6.
- Placer sur le mandrin 1 et les bagues 2 les fibres pré-imprégnées de résine (3) par enroulement filamentaire (fig.7). A titre d'exemple, il peut s'agir de fibres de carbone imprégnées d'une résine époxy.
- Cuire l'ensemble formé par le mandrin, les bagues et les fibres pré-imprégnées pour polymériser la résine. A titre d'exemple, pour une résine époxy, la température de cuisson est de l'ordre de 150 à 190°C.
- Enlever le mandrin 1 pour obtenir un tube 4 composite (fig.8). Les bagues 2 sont ainsi toujours prisonnières du tube en composite 4.
- Découper le tube 4 au niveau des bagues 2 pour obtenir un corps de bielle 5 avec une portion de bague 2 à chaque extrémité (fig.9 et 10). Préférentiellement, chaque bague est coupée à mi-longueur. Le tube est ainsi coupé à dimension en fonction de la position des bagues. La découpe sera reproduite en fonction du nombre de bagues installées.
- Retirer les portions de bagues à chaque extrémité du tube pour former un corps de bielle 5 avec un filet interne 6 à chaque extrémité (fig.2),
- Visser un insert 7 au niveau de chaque filet interne 6 pour réaliser la bielle avec inserts vissés 8 (fig.3). Ils peuvent être réalisés dans un matériau métallique ou dans un autre matériau tel qu'un matériau thermoplastique.

Pour finir, on précisera que la bielle peut par ailleurs être munie de moyens anti-rotation pour bloquer l'insert.

## Revendications

1. Procédé de fabrication d'une bielle avec inserts vissés (8) comprenant les étapes consistant à :
- Mettre à disposition un mandrin (1) cylindrique,
- Mettre à disposition une pluralité de bagues (2) ayant un diamètre intérieur sensiblement égal à celui du diamètre extérieur du mandrin (1), lesdites bagues (2) présentant un filet externe (2b) et un alésage interne circulaire (2a),
- Positionner à intervalle sur la longueur du mandrin (1) lesdites bagues (2),
- Placer sur le mandrin (1) et les bagues (2) des fibres pré-imprégnées de résine (3) par enroulement filamentaire,
- Cuire l'ensemble formé par le mandrin (1), les bagues (2) et les fibres pré-imprégnées (3) pour polymériser la résine,
- Enlever le mandrin (1) pour obtenir un tube (4),
- Découper le tube (4) au niveau des bagues (2) pour obtenir un corps de bielle (5) avec une portion de bague (2) à chaque extrémité,
- Retirer les portions de bagues (2) à chaque extrémité du tube (4) pour former un corps de bielle (5) avec un filet interne (6) à chaque extrémité,
- Visser un insert (7) au niveau de chaque filet interne (6) pour réaliser la bielle avec inserts vissés (8).

2. Procédé selon la revendication 1, **caractérisé en ce que** lesdites bagues (2) sont en téflon.

3. Procédé selon la revendication 1 ou 2, **caractérisé en ce que** les fibres pré-imprégnées de résine (3) sont des fibres de carbone imprégnées d'une résine époxy.

4. Procédé selon l'une des revendications précédentes, **caractérisé en ce que** la portion de bague (2) correspond à une moitié de bague (2).

5. Procédé selon l'une des revendications précédentes, **caractérisé en ce que** le filet interne (6) a un diamètre constant.

6. Procédé selon l'une des revendications précédentes, **caractérisé en ce que** les inserts (7) sont métalliques ou en matériau thermoplastique.

## Patentansprüche

1. Verfahren zur Herstellung einer Verbindungsstange mit Schraubeinsätzen (8), umfassend die Schritte, bestehend aus:
- Bereitstellen eines zylindrischen Dorns (1),
- Bereitstellen einer Vielzahl von Ringen (2), umfassend einen Innendurchmesser, der im Wesentlichen gleich demjenigen des Außendurchmessers des Dorns (1) ist, wobei die Ringe (2) ein Außengewinde (2b) und eine kreisförmige Innenbohrung (2A) aufweisen,
- Positionieren der Ringe (2) in Intervallen auf der Länge des Dorns (1),
- Platzieren auf dem Dorn (1) und den Ringen (2) von Fasern, die mit Harz (3) durch Fadenwicklung vorimprägniert sind,
- Erhitzen der Einheit, gebildet aus dem Dorn (1), den Ringen (2) und den vorimprägnierten Fasern (3), um das Harz zu polymerisieren,
- Entfernen des Dorns (1), um ein Rohr (4) zu erhalten,
- Schneiden des Rohrs (4) auf der Ebene der Ringe (2), um einen Verbindungsstangenkörper (5) mit einem Ringabschnitt (2) an jedem Ende zu erhalten,
- Zurückziehen der Ringabschnitte (2) an jedem Ende des Rohrs (4), um einen Verbindungsstangenkörper (5) mit einem Innengewinde (6) an jedem Ende zu bilden,
- Schrauben eines Einsatzes (7) auf der Ebene jedes Innengewindes (6), um die Verbindungsstange mit Schraubeneinsätzen (8) herzustellen.

2. Verfahren nach Anspruch 1, **dadurch gekennzeichnet, dass** die Ringe (2) aus Teflon sind.

3. Verfahren nach Anspruch 1 oder 2, **dadurch gekennzeichnet, dass** die mit Harz vorimprägnierten Fasern (3) mit einem Epoxidharz vorimprägnierte Kohlenstofffasern sind.

4. Verfahren nach einem der vorhergehenden Ansprüche, **dadurch gekennzeichnet, dass** der Ringabschnitt (2) einer Ringhälfte (2) entspricht.

5. Verfahren nach einem der vorhergehenden Ansprüche, **dadurch gekennzeichnet, dass** das^{b}Innengewinde (6) einen konstanten Durchmesser aufweist.

6. Verfahren nach einem der vorhergehenden Ansprüche, **dadurch gekennzeichnet, dass** die Einsätze (7) metallisch oder aus thermoplastischem Material sind.

## Claims

1. A method for manufacturing a connecting rod with screwed inserts (8) comprising the following steps:
- Providing a cylindrical mandrel (1),
- Providing a plurality of rings (2) having an inner diameter substantially equal to that of the outer diameter of the mandrel (1), said rings (2) having an external thread (2b) and a circular internal bore (2a),
- Positioning said rings (2) at intervals over the length of the mandrel (1),
- Placing fibers pre-impregnated with resin (3) on the mandrel (1) and the rings (2) by filament winding,
- Curing the assembly formed by the mandrel (1), the rings (2) and the pre-impregnated fibers (3) in order to polymerize the resin,
- Removing the mandrel (1) to obtain a tube (4),
- Cutting the tube (4) at the rings (2) in order to obtain a connecting rod body (5) with a ring portion (2) at each end,
- Removing the ring portions (2) at each end of the tube (4) in order to form a connecting rod body (5) with an internal thread (6) at each end,
- Screwing an insert (7) at each internal thread (6) to produce the connecting rod with screwed inserts (8).

2. The method according to claim 1, **characterized in that** said rings (2) are made from Teflon.

3. The method according to claim 1 or 2, **characterized in that** the fibers pre-impregnated with resin (3) are carbon fibers impregnated with an epoxy resin.

4. The method according to one of the preceding claims, **characterized in that** the ring portion (2) corresponds to a ring half (2).

5. The method according to one of the preceding claims, **characterized in that** the internal thread (6) has a constant diameter.

6. The method according to one of the preceding claims, **characterized in that** the inserts (7) are made from metal or from a thermoplastic material.
